# EUROPÄISCHE PATENTSCHRIFT

(11) **EP 1 335 010 B1**
(45) Veröffentlichungstag und Bekanntmachung des Hinweises auf die Patenterteilung: **07.10.2009**
(21) Anmeldenummer: 03001414.6
(22) Anmeldetag: 22.01.2003
(51) Int. Cl.: C09J 201/00, C09J 7/02, B32B 7/10

(54) **Verfahren zur Herstellung eines Klebestreifenlaminates**
Method for producing an adhesive strip laminate
Procedé de production d'un stratifié de rubans adhésifs

(30) Priorität: 07.02.2002 DE 10204930
(43) Veröffentlichungstag der Anmeldung: 13.08.2003
(73) Patentinhaber: TESA SE, 20253 Hamburg (DE)
(72) Erfinder: Zimmermann, Dieter, 21635 Jork (DE); Schulze, Walter, 25421 Pinneberg (DE)

(56) Entgegenhaltungen:
- EP-A- 0 519 086
- EP-A- 0 980 902
- DE-A- 19 649 727
- US-A1- 2002 009 568

## Beschreibung

Die Erfindung betrifft ein Verfahren zur Herstellung eines Klebestreifenlaminates gemäß dem Oberbegriff des Anspruchs 1 sowie ein Klebestreifenlaminat gemäß dem Oberbegriff des Anspruchs 9.

Aus dem Stand der Technik sind doppelseitige Klebefolien bzw. Klebestreifen bekannt, die durch Verstrecken entlang der Verklebungsebene rückstands- und zerstörungsfrei entfernt werden können. Der Vorgang des Entfernens des Klebestreifens ähnelt dabei dem Öffnen eines Einmachglases, bei dem der Dichtgummiring zwischen den Dichtflächen herausgezogen wird. Die beidseitig wirkenden Klebestreifen, sogenannte "Power Strips", sind in aller Regel beidseitig mit Schutzfolien ausgerüstet, um ein ungewolltes Anhaften zu vermeiden. Solche Produkte sind beispielsweise in der DE 33 31 016 und der DE 42 33 872 beschrieben.

Nachteilig an solcher Art hergestellter Produkte sind die Schutzfolienreste, die nach Anwendung des Klebestreifens entsorgt werden müssen. Ein Aufeinanderschichten der Klebestreifen ohne Schutzfolien, wie silikonisiertes Papier oder gekreppte PVC-Folie, ist zudem nicht möglich, da die klebenden Seiten sich nicht mehr voneinander lösen lassen. Darüber hinaus besteht die Schwierigkeit, übereinandergelegte Klebestreifen, die durch Schutzfolien voneinander getrennt sind, in geeigneten Abmessungen zuzuschneiden, da ein solches Laminat relativ dick ist.

Aus der EP 0 519 086 A1 ist ein Klebestreifenlaminat mit einem ersten Klebestreifen, der beidseitig klebend ausgebildet, und einem zweiten Klebestreifen, dessen eine Seite von einer klebenden Seite des ersten Klebestreifens ablösbar ausgebildet ist, bekannt.

Ausgehend von diesem Stand der Technik liegt der vorliegenden Erfindung die Aufgabe zugrunde, ein Verfahren bereitzustellen, mit dem ein Klebestreifenlaminat aus zumindest zwei Klebestreifen hergestellt werden kann. Eine weitere Aufgabe der vorliegenden Erfindung ist es, ein Klebestreifenlaminat aus zumindest zwei Klebestreifen bereitzustellen, das leicht übereinander schichtbar ist und nur geringen Verpackungsrestriktionen unterworfen ist.

Erfindungsgemäß werden diese Aufgaben durch ein Verfahren mit den Merkmalen des Anspruchs 1 und durch ein Klebestreifenlaminat mit den Merkmalen des Anspruchs 9 gelöst.

Durch das vorherige Zuschneiden eines ersten Klebestreifens, der beidseitig klebend ausgebildet ist, und das anschließende Aufbringen eines zweiten Klebestreifens mit einer von dem ersten Klebestreifen ablösbaren Seite wird zumindest eine Schutzfolie oder silikonisiertes Trennpapier eingespart, und die anfallende Abfallmenge wird verringert.

Aufgrund des nachfolgenden Zuschnittes des zweiten Klebestreifens auf die gewünschten Abmessungen, insbesondere die Abmessungen des ersten Klebestreifens, ist jeweils nur ein Ausschneiden bzw. Trennen eines Klebestreifens notwendig, so dass ein entsprechendes Werkzeug bei der Herstellung des Klebestreifenlaminates nicht durch beide Klebestreifen hindurchgehen muss.

Aus Gründen der besseren Handhabung ist es vorgesehen, dass der erste Klebestreifen nach dessen Zuschnitt auf die gewünschten Abmessungen auf einem silikonisierten Trennmaterial aufgebracht wird, von dem dieser leicht wieder gelöst werden kann. Zur besseren Handhabung im weiteren Herstellungsprozeß ist es vorgesehen, dass der erste Klebestreifen nach dem Zuschnitt auf eine sogenannte Mutterrolle aufgerollt wird, vorzugsweise nachdem er auf dem silikonisierten Trennmaterial aufgebracht wurde. So ist es möglich, die Klebestreifenzuschnitte durch einfaches Abrollen der sogenannten Mutterrolle dem weiteren Verarbeitungsprozeß zuzuführen.

Um ein einfaches Ablösen und ein gegebenenfalls Wiederanhaften des zweiten Klebestreifens auf der Klebeseite des ersten Klebestreifens zu ermöglichen, ist es vorgesehen, dass der zweite Klebestreifen einseitig mit Stearylacrylat, das schwach klebend wirkt, beschichtet und auf der anderen Seite bedruckt ist, so dass diese Seite nichtklebend ausgebildet ist.

Zur schnellen und genauen Herstellung der gewünschten Produkte bzw. des Klebestreifenlaminates ist es vorgesehen, dass der erste und der zweite Klebestreifen gestanzt werden, insbesondere rotativ gestanzt. Durch die rotative Stanzung treffen die Klebestreifen bzw. die Klebestreifenstanzlinge genau aufeinander und bilden ein Laminat, dessen klebende Seiten beidseitig nach außen gerichtet sind, wobei eine Seite von einem nichthaftenden Trennmaterial abgedeckt ist.

In einer Weiterbildung der Erfindung ist es vorgesehen, dass der erste und/oder der zweite Klebestreifen durch dehnbares Verstrecken in Richtung der Verklebungsebene im wesentlichen rückstands- und zerstörungsfrei ablösbar ausgebildet ist, um die beiden Klebestreifen entfernbar einsetzen zu können.

Eine Möglichkeit der Ausgestaltung des Verfahrens besteht darin, dass der erste Klebestreifen von einem Trennmaterial, vorzugsweise einem einseitig beschichtetem Trennpapier dekaschiert und rotativ gestanzt wird. Der so erhaltene Klebestreifenstanzling wird auf einem beidseitig silikonisierten Trennmaterial, z. B. Trennpapier aufgebracht und aufgerollt, so dass er eine sogenannte Mutterrolle bildet. Der zweite Klebestreifen ist ebenfalls auf einer zweiten Mutterrolle aufgerollt und einseitig mit Stearylacrylat beschichtet, wodurch diese Seite schwach klebend wirkt, jedoch von der Klebeseite des ersten Klebestreifens ablösbar ist. Im Rahmen einer rotativen Stanzung wird der zweite Klebestreifen mit dem ersten Klebestreifenstanzling zusammengeführt und auf das gewünschte Maß bzw. die gewünschten Abmessungen zugeschnitten. Auf diese Art und Weise wird zweimal jeweils nur ein Klebestreifen durchgeschnitten oder gestanzt, so dass das relativ dicke Laminat aus dem ersten und dem zweiten Klebestreifen problemlos hergestellt werden kann.

Ein beispielsweise durch das oben beschriebene Verfahren erhaltenes Klebestreifenlaminat weist somit einen ersten Klebestreifen auf, der beidseitig klebend ausgebildet ist, sowie einen zweiten Klebestreifen, dessen eine Seite von dem ersten Klebestreifen ablösbar ausgebildet ist. Dadurch dass die ablösbare Seite des zweiten Klebestreifens die eine klebende Seite des ersten Klebestreifens zumindest teilweise abdeckt, ist eine Stapelbarkeit der Klebestreifenzuschnitte gegeben, ebenso wie eine Verringerung des Abfalles an Schutzfolien oder Abdeckungen. Darüber hinaus können beide Klebestreifen zur Befestigung von Gegenständen bzw. zur klebenden Fixierung der Gegenstände eingesetzt werden.

Vorteilhafterweise sind beide Klebestreifen bzw. alle Klebestreifen des Klebestreifenlaminates durch dehnbares Verstrecken in Richtung der Verklebungsebene im wesentlichen rückstands- und zerstörungsfrei ablösbar, wodurch ein vielseitiger Einsatz beider bzw. aller Klebestreifen oder Klebestreifenzuschnitte des Laminates gewährleistet ist.

Um ein problemloses Ablösen der Klebestreifen voneinander zu ermöglichen; ist es vorgesehen, dass eine Seite des zweiten Klebestreifens mit Stearylacrylat beschichtet ist, wodurch eine reversible Trennung der Klebestreifen möglich ist.

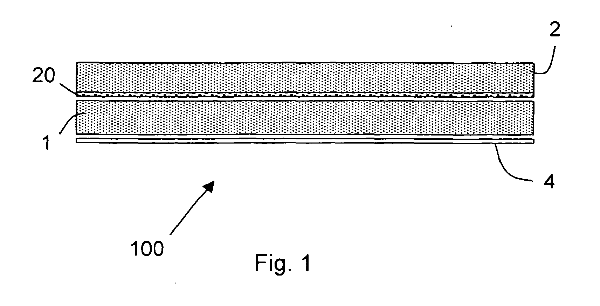

Nachfolgend wird ein Ausführungsbeispiel der Erfindung anhand der beigefügten Figur erläutert, die ein Querschnitt durch ein Klebestreifenlaminat schematisch darstellt.

Das Bezugszeichen 100 bezeichnet ein Laminat aus zwei Klebestreifen 1 und 2, die im wesentlichen die gleiche Materialstärke aufweisen und in den gleichen Abmessungen zugeschnitten sind. Der erste Klebestreifen 1 ist beidseitig klebend ausgebildet und wird in einem Trennverfahren, vorzugsweise einer rotativen Stanzung, auf die gewünschten Abmessungen zugeschnitten und auf einem beidseitig silikonisierten Trennmaterial 4 aufgebracht. Die so erhaltenen Klebestreifenstanzlinge werden auf eine Muttertolle aufgerollt und von dieser weiterverarbeitet.

Eine zweite Mutterrolle besteht aus einem zweiten Klebestreifen 2, dessen eine Seite 20 derart behandelt ist, dass sie von der Klebeseite des ersten Klebestreifens 1 einfach, vorzugsweise reversibel ablösbar ist. Eine solche Beschichtung erfolgt mit Stearylacrylat, wodurch die beiden Klebestreifen 1, 2 voneinander lösbar gemacht werden. Von der zweiten Mutterrolle wird der zweite Klebestreifen 2 ebenfalls vorzugsweise rotativ gestanzt und während des Stanzvorganges mit dem ersten Klebestreifenstanzling zusammengeführt, so dass die ablösbare Seite 20 auf derjenigen Seite des ersten Klebestreifens 1 zu liegen kommt, die nicht von dem Trennmaterial 4 abgedeckt ist. Auf diese Art und Weise wird ein Laminat bestehend aus einem ersten und zweiten Klebestreifen 1, 2 hergestellt, das aus Klebestreifenstanzlingen besteht und das einfach in die beiden Klebestreifenstanzlinge vereinzelt werden kann.

Da der zweite Klebestreifen 2 eine Klebeseite und eine schwach klebende Seite 20 aufweist, kann dieser nach dem Abziehen als normaler, einseitig wirkender Klebestreifen verwendet werden.

Vorteilhafterweise sind beide Klebestreifen 1, 2 des Klebestreifenlaminats 100 durch verstreckendes Ziehen in Richtung der Verklebungsebene von einem Substrat entfernbar, so dass ein Anwender beide Bestandteile des Laminates 100 in gewohnter Art und Weise verwenden kann und den als Schutzfolie dienenden zweiten Klebestreifen 2 für eine reversible, rückstands- und zerstörungsfreie Befestigung für Druckerzeugnisse oder dergleichen verwenden kann.

Eine mögliche Anwendung des Laminats 100 erfolgt, indem man das Laminat von dem Trennpapier bzw. Trennmaterial 4 entfernt und es auf das festzuklebende Objekt klebt. Danach trennt man, leicht in Richtung der Verklebungsebene ziehend, den zweiten Klebestreifen 2 ab und klebt das Objekt an die Wand bzw. auf die vorgesehene Fläche. Den abgetrennten, zweiten Klebestreifen 2 kann man dann für eine reversible Befestigung über die mit Stearylacrylat versehene Klebestreifenseite 20 verwenden.

Die beiden Klebestreifen 1, 2 bestehen aus einer Masse, die beispielsweise in der DE 33 31 016 A1 beschrieben ist.

## Patentansprüche

1. Verfahren zur Herstellung eines Klebestreifenlaminats aus zwei Klebestreifen, indem ein erster Klebestreifen (1) mit zwei klebenden Seiten in gewünschten Abmessungen zugeschnitten wird und anschließend ein zweiter Klebestreifen (2) mit einer von dem ersten Klebestreifen (1) ablösbaren Seite auf der klebenden Seite des ernsten Klebestreifens (1) aufgebracht wird, **dadurch gekennzeichnet, dass** die Seite des zweiten Klebestreifens (2), die von dem ersten Klebestreifen (1) ablösbar ist, mit Stearylacrylat beschichtet ist

2. Verfahren nach Anspruch 1, **dadurch gekennzeichnet, dass** der zweite Klebestreifen (2) auf die Abmessungen des ersten Klebestreifens (1) oder darüberstehend zugeschnitten wird.

3. Verfahren nach Anspruch 1 oder 2, **dadurch gekennzeichnet, dass** der erste Klebestreifen (1) nach dessen Zuschnitt auf einem silikonisierten Trennmaterial (4) aufgebracht wird.

4. Verfahren nach einem der voranstehenden Ansprüche, **dadurch gekennzeichnet, dass** der erste Klebestreifen (1) nach dessen Zuschnitt aufgerollt wird.

5. Verfahren nach Anspruch 1, **dadurch gekennzeichnet, dass** die nicht mit Stearylacrylat beschichtete Seite bedruckt und nichtklebend ist.

6. Verfahren nach einem der voranstehenden Ansprüche, **dadurch gekennzeichnet, dass** der erste und der zweite Klebestreifen (1, 2) gestanzt, insbesondere rotativ gestanzt werden.

7. Verfahren nach einem der voranstehenden Ansprüche, **dadurch gekennzeichnet, dass** der erste und/oder der zweite Klebestreifen (1, 2) durch dehnbares Verstrecken in Richtung der Verklebungsebene im wesentlichen rückstands- und zerstörungsfrei ablösbar ausgebildet ist.

8. Verfahren nach einem der voranstehenden Ansprüche, **dadurch gekennzeichnet, dass** der erste Klebestreifen (1) von einem Trennmaterial dekaschiert und rotativ gestanzt wird, dass der gestanzte Klebestreifen (1) auf einem beidseitig silikonisierten Trennmaterial aufgebracht und aufgerollt wird und dass der zweite Klebestreifen (2) bei einer rotativen Stanzung mit den ersten Klebestreifenstanzlingen zusammengeführt und auf das gewünschte Maß zugeschnitten wird.

9. Klebestreifenlaminat mit zumindest einem ersten Klebestreifen (1), der beidseitig klebend ausgebildet, und einem zweiten Klebestreifen (2), dessen eine Seite (20) von einer klebenden Seite des ersten Klebestreifens (1) ablösbar ausgebildet ist, wobei die ablösbare Seite (20) des zweiten Klebestreifens (2) eine klebende Seite des ersten Klebestreifens (1) zumindest teilweise abdeckt, **dadurch gekennzeichnet, dass** die Seite des zweiten Klebestreifens (2), die von dem ersten Klebestreifen (1) ablösbar ist, mit Stearylacrylat beschichtet ist.

10. Klebestreifenlaminat nach Anspruch 9, **dadurch gekennzeichnet, dass** die Klebestreifen (1, 2) durch dehnbares Verstrecken in Richtung der Verklebungsebene im wesentlichen rückstands- und zerstörungsfrei ablösbar ausgebildet sind.

11. Klebestreifenlaminat nach Anspruch 9 oder 10, **dadurch gekennzeichnet, dass** die der ablösbaren Seite (20) gegenüberliegende Seite des zweiten Klebestreifens (2) bedruckt und nichtklebend ausgebildet ist.

## Claims

1. Method for the production of an adhesive strip laminate from two adhesive strips, in that a first adhesive strip (1) having two adhesive sides is cut to desired dimensions, and subsequently a second adhesive strip (2) having a side detachable from the first adhesive strip (1) is applied to the adhesive side of the first adhesive strip (1), **characterized in that that** side of the second adhesive strip (2) which is detachable from the first adhesive strip (1) is coated with stearyl acrylate.

2. Method according to Claim 1, **characterized in that** the second adhesive strip (2) is cut to the dimensions of the first adhesive strip (1) or in excess of these.

3. Method according to Claim 1 or 2, **characterized in that** the first adhesive strip (1), after being cut to size, is applied to a siliconized separating material (4).

4. Method according to one of the preceding claims, **characterized in that** the first adhesive strip (1), after being cut to size, is rolled up.

5. Method according to Claim 1, **characterized in that** the side not coated with stearyl acrylate is printed and is non-adhesive.

6. Method according to one of the preceding claims, **characterized in that** the first and the second adhesive strip (1, 2) are punched, in particular punched rotationally.

7. Method according to one of the preceding claims, **characterized in that** the first and/or the second adhesive strip (1, 2) are/is designed to be essentially completely and non-destructively detachable by means of stretchable drawing in the direction of the plane of adhesion.

8. Method according to one of the preceding claims, **characterized in that** the first adhesive strip (1) is delaminated from a separating material and punched rotationally, **in that** the punched adhesive strip (1) is applied to a separating material siliconized on both sides and is rolled up, and **in that**, during rotational punching, the second adhesive strip (2) is combined with the first adhesive strip punchings and is cut to the desired dimension.

9. Adhesive strip laminate with at least one first adhesive strip (1) which is designed to be adhesive on both sides and with a second adhesive strip (2), one side (20) of which is designed to be detachable from an adhesive side of the first adhesive strip (1), the detachable side (20) of the second adhesive strip (2) at least partially covering an adhesive side of the first adhesive strip (1), **characterized in that that** side of the second adhesive strip (2) which is detachable from the first adhesive strip (1) is coated with stearyl acrylate.

10. Adhesive strip laminate according to Claim 9,
**characterized in that** the adhesive strips (1, 2) are designed to be essentially completely and non-destructively detachable by means of stretchable drawing in the direction of the plane of adhesion.

11. Adhesive strip laminate according to Claim 9 or 10, **characterized in that that** side of the second adhesive strip (2) which lies opposite the detachable side (20) is printed and is designed to be non-adhesive.

## Revendications

1. Procédé de production d'un stratifié de rubans adhésifs composé de deux rubans adhésifs, dans lequel un premier ruban adhésif (1) avec deux faces adhésives est découpé aux dimensions désirées et ensuite un deuxième ruban adhésif (2) avec une face séparable du premier ruban adhésif (1) est appliqué sur la face adhésive du premier ruban adhésif (1), **caractérisé en ce que** la face du deuxième ruban adhésif (2), qui est séparable du premier ruban adhésif (1), est revêtue de stéaryle acrylate.

2. Procédé selon la revendication 1, **caractérisé en ce que** le deuxième ruban adhésif (2) est découpé aux dimensions du premier ruban adhésif (1) ou avec un dépassement.

3. Procédé selon la revendication 1 ou 2,
**caractérisé en ce que** le premier ruban adhésif (1) est appliqué, après son découpage, sur un matériau de séparation siliconé (4).

4. Procédé selon l'une quelconque des revendications précédentes, **caractérisé en ce que** le premier ruban adhésif (1) est enroulé après son découpage.

5. Procédé selon la revendication 1, **caractérisé en ce que** la face qui n'est pas revêtue de stéaryle acrylate est imprimée et non adhésive.

6. Procédé selon l'une quelconque des revendications précédentes, **caractérisé en ce que** le premier et le deuxième rubans adhésifs (1, 2) sont estampés, en particulier estampés de façon rotative.

7. Procédé selon l'une quelconque des revendications précédentes, **caractérisé en ce que** le premier et/ou le deuxième ruban adhésif (1, 2) est rendu séparable essentiellement sans résidus et sans destruction par une extension élastique dans la direction du plan de collage.

8. Procédé selon l'une quelconque des revendications précédentes, **caractérisé en ce que** le premier ruban adhésif (1) est délaminé d'un matériau de séparation et estampé de façon rotative, **en ce que** le ruban adhésif estampé (1) est appliqué et enroulé sur un matériau de séparation siliconé sur les deux faces et **en ce que** le deuxième ruban adhésif (2) est assemblé aux ébauches d'estampage du premier ruban adhésif lors d'un estampage rotatif et découpé à la dimension désirée.

9. Stratifié de rubans adhésifs avec au moins un premier ruban adhésif (1), qui est adhésif sur les deux faces, et un deuxième ruban adhésif (2), dont une face (20) est séparable d'une face adhésive du premier ruban adhésif (1), dans lequel la face séparable (20) du deuxième ruban adhésif (2) recouvre au moins partiellement une face adhésive du premier ruban adhésif (1), **caractérisé en ce que** la face du deuxième ruban adhésif (2), qui est séparable du premier ruban adhésif (1), est revêtue de stéaryle acrylate.

10. Stratifié de rubans adhésifs selon la revendication 9, **caractérisé en ce que** les rubans adhésifs (1, 2) sont séparables essentiellement sans résidus et sans destruction par une extension élastique dans la direction du plan de collage.

11. Stratifié de rubans adhésifs selon la revendication 9 ou 10, **caractérisé en ce que** la face du deuxième ruban adhésif (2) opposée à la face séparable (20) est imprimée et non adhésive.
